# EUROPEAN PATENT SPECIFICATION

(11) **EP 2 618 663 B1**
(45) Date of publication and mention of the grant of the patent: **17.12.2014**
(21) Application number: 11781606.6
(22) Date of filing: 23.09.2011
(51) Int. Cl.: A01N 37/42, A01N 49/00, C05F 11/10, A01N 43/653, A01N 27/00, A01N 37/44, A01P 21/00

(54) **USE OF A COMPOSITION FOR THE INCREASE OF CROP YIELD**
VERWENDUNG EINER ZUSAMMENSETZUNG ZUR ERHÖHUNG DES ERNTEERTRAGES
UTILISATION D'UNE COMPOSITION POUR AUGMENTER LE RENDEMENT DES CULTURES

(30) Priority: 23.09.2010 BE 201000568
(43) Date of publication of application: 31.07.2013
(73) Proprietor: Globachem, 3800 Sint-Truiden (BE)
(72) Inventor: QUAGHEBEUR, Koen, 3803 Sint-Truiden (BE)
(74) Representative: Caers, Raphael Frans Ivo
(86) International application number: PCT/IB2011/054207
(87) International publication number: WO 2012/038935

(56) References cited:
- EP-A2- 0 348 767
- WO-A1-2007/008580
- WO-A1-2008/094567
- WO-A1-2008/094589
- WO-A1-2009/061496
- WO-A2-2010/015337
- WO-A2-2010/081646
- US-A- 4 581 057
- US-A1- 2008 318 787
- DATABASE WPI Week 199327 Thomson Scientific, London, GB; AN 1993-216610 XP002635221, & JP 5 139912 A (TORAY IND INC) 8 June 1993 (1993-06-08) cited in the application
- DATABASE CAPLUS [Online] CHEMICAL ABSTRACTS SERVICE, COLUMBUS, OHIO, US; 2003, S. Yang et al.: "Agent for improving cold-resistance of soybean", XP002635222, retrieved from STN accession no. 2003:275373 Database accession no. 2003:275373 cited in the application & CN 1 358 432 A (HEILONGJIANG RES. INST. OF AGRICULTURAL MODERNIZATION) 17 July 2002 (2002-07-17)
- DATABASE WPI Week 199419 Thomson Scientific, London, GB; AN 1994-156520 XP002674105, & JP 6 100406 A (TORAY IND INC) 12 April 1994 (1994-04-12)
- DATABASE WPI Week 199419 Thomson Scientific, London, GB; AN 1994-156521 XP002674106, & JP 6 100407 A (TORAY IND INC) 12 April 1994 (1994-04-12)
- LIU Y ET AL: "Pharmaceutical composition for improving blood red fruited percentage of southland pear tree comprises sucrose, monopotassium phosphate, abscisic acid, threonine, serine, glutamic acid, phenyl alanine, levulinate, boric acid and Tween 100", WPI / THOMSON,, vol. 2009, no. 25, 28 January 2009 (2009-01-28), XP002635514,
- DATABASE WPI Week 200733 Thomson Scientific, London, GB; AN 2007-349115 XP002674107, & JP 2007 091611 A (DAIICHI KOGYO SEIYAKU CO LTD) 12 April 2007 (2007-04-12)

## Description

The present invention relates to the increasing of yield of agricultural and horticultural crops using a composition containing S-abscisic acid or a salt thereof, in combination with another growth-inhibiting active substance or agent.

S-abscisic acid is a plant hormone which occurs as such in nature and which is involved in the regulation of physiological processes in plants. Every plant cell is by itself able to synthesize abscisic acid. The compound brings a higher stress tolerance to plants by passing, under circumstances of for instance shortage of moisture or nutrients, signals to various plant organs which initiate or suppress certain processes. It may e.g. regulate the opening of plant pores and it is important for the putting at rest of seeds and buds.

Abscisic acid is primarily known as a stress hormone. It suppresses the effects of other plant hormones and is also a natural growth inhibitor. Abscisic acid has a signaling function to activate anti-stress mechanisms in the proper plant organ. These mechanisms operate at the expense of other processes such as growth or production. By inhibiting growth under stress conditions, plants reserve more energy for resisting the stress conditions. Together with the growth improvement plant hormones, such as auxins, gibberellins and cytokinins, abscisic acid regulates the ageing processes, leaf loss, flower formation, fruit riping, germ and bud rest, and the evaporation.

JP 5139912 A describes the combination of S-abscisic acid with gibberellins for the growth stimulation of plants.

Besides various applications as growth inhibitor, S-abscisic acid is in US 2008/0318787 A1 also used for the stimulation of fruit set and the production of fruits from the ovary without prior insemination, i.e. fruits without seeds, also called parthenocarpic fruits.

Fruit set is generally understood as the percentage of blossoms which develop into fruit. Generally speaking, fruit set with fruit crops is 10 to 30%, depending on the year, the variety, the blossom density and the weather conditions. US 2008/0318787 A1 describes how the fruit set with different agricultural crops such as fruit trees may be increased by the application of abscisic acid. Further also a growth inhibiting effect is described, more particularly the growth inhibiting effect on the vegetative growth of the plant. This growth inhibition is however limited in time.

Vegetative growth translates usually into a strong growth of the shoot of the plant, and is therefore often characterized by growth of the plant in the longitudinal direction. This is particularly noticeable with fruit trees. Vegetative growth is further also particularly directed to the growth of the green parts of plants. US 2008/0318787 A1 further describes how the quality of the fruit itself, for instance the colour, also improves by inhibiting vegetative growth, because sunlight for reaching the fruits or seeds is less hindered by the leaves and other green parts of the plant.

S-abscisic acid is in US 2008/0318787 A1 primarily described as an environmentally friendly alternative for synthetic growth inhibitors, which achieve similar effects but show a less favorable toxicological profile.

The disadvantage of the use of abscisic acid according to US 2008/0318787 A1 is that the increase of fruit set and yield of the agricultural crops remains limited.

WO 2008/094589 discloses that S-abscisic acid at the doses described also has a fruit thinning effect when applied just prior or during the flowering of stone fruit.

Several publications further disclose how S-abscisic acid, possibly in combination with other active compounds, may be employed for the increase of the durability of plants which are under stress, which emphasizes the application of S-abscisic acid as a stress hormone. The following publications describe the treatment of plants in stress conditions with S-abscisic acid, possibly in combination with another active compound.

As such, CN 1358432 discloses the use of a composition comprising tetrandrine, abscisic acid and uniconazole on soybeans during frost periods, in order to thereby limit frost damage.

Also WO 2007/008580 A1 describes the use of S-abscisic acid together with diniconazole on a non-fruit carrying test plant, or on typical grass for golf courses, under stress conditions because of draught or cold.

WO 2008/094567 discloses the use of S-abscisic acid (ABA) with gibberellin biosynthesis inhibitors to inhibit the growth of peat grass such that less water needs to be sprayed and/or less mowing is needed. In example 9 these compositions are applied to tomato plants. Already 15 days after the treatment, the plants were harvested and their number of leaves was counted. The yield of the plants was not measured.

WO 2010/015337 A2 describes the use of a composition with abscisic acid and a gibberellin inhibitor to improve the abiotic stress resistance, and this at doses of at least 100 g/ha.

These documents are thus concerned with S-ABA as stress hormone, and test its effects under stress conditions, i.e. when the plant needs energy for fighting the stress and cannot use it for the energetically demanding vegetative growth. During stress conditions a plant will therefore reduce its vegetative growth.

There therefore remains a need for a means to further increase the yield of crops with a higher efficiency than the currently available processes and methods.

It is the objective of the present invention to provide a means for increasing the yield of crops which is more efficient than the currently available processes and methods.

This target is achieved by the use of a composition containing S-abscisic acid or a salt thereof and another growth-inhibiting active substance during a period of vegetative growth for increasing the yield of agricultural and horticultural crops, whereby the S-abscisic acid or the salt thereof is dosed in an amount corresponding to at most 40 g/ha.

The inventor surprisingly found by combining S-abscisic acid (ABA) with another growth-inhibiting substance, and by applying this composition during a period of vegetative growth and thus during a period wherein the plant is not under stress, that the yield of agricultural and horticultural crops is stimulated significantly. It is even more surprising that thereby the S-abscisic acid is dosed preferably below this specified limit. It is particularly surprising that a combination of two different growth inhibitors, applied during the correct period of vegetative growth and with ABA in a low dosing, leads to an increased yield in agricultural and horticultural crops.

The inventors have found that the composition as used according to the present invention therefore has to be applied during a period of vegetative growth. The vegetative growth of plants is usually strongly reduced in periods when the plant is under stress. A plant under stress is thus by definition not a plant in a period of vegetative growth. It is thus the surprising finding by the inventors that, in combination with another growth-inhibiting substance, the yield under conditions of vegetative growth may indeed be increased by S-abscisic acid, and this at a low dosing level.

Because the vegetative growth of a plant may sometimes be very strong, a significant part of the energy and nutrients of the plant is directed to the processes which are associated with this type of growth. Vegetative growth may be advantageous for the grower, but with full grown plants it is often considered a disadvantage. It indeed often has as a consequence that the generative growth, i.e. the growth of the generative parts of the plant such as fruits, seeds, and alike, is impaired. Thereby is caused a lower yield of crops, which is disadvantageous for the grower. As already mentioned above, abscisic acid thanks to its growth inhibiting effect may inhibit the vegetative growth. The inventor has found that thereby the generative growth is stimulated. The balance between the two types of plant growth is thus shifted, which leads to an increased fruit set and yield.

The inventor has further found that there is undoubtedly a synergistic effect between S-abscisic acid and other growth inhibiting substances.

The inventor has further found that S-abscisic acid has a fruit setting effect.

By the addition of the other growth inhibiting substance, and by the application during a period of primarily or high vegetative growth, the vegetative growth is yet further impaired as with the use of abscisic acid alone, whereby the generative growth is yet further enhanced. Thereby an even further increased fruit set is obtained, which to the surprise of the inventors leads to a higher number of fruits or seeds, with consequently a strongly increased yield of the agricultural and/or horticultural crops. In addition, also the size of the fruits or the seeds themselves shall be larger, whereby the total yield is increased even further.

Additionally also the growth of the green part of the plant during this period of strong vegetative growth will be more impaired as compared with the use of S-abscisic acid alone, whereby the plants will have less and smaller leaves and other green parts. Thereby the fruits shall be much more accessible for sunlight and aeration, which is of course also beneficial for the quality and the color of the fruits and seeds. The improvements of color and quality associated with this may also possibly be obtained mechanically, for instance by pruning the plants more or faster. This however is labor intensive, and the use according to the present invention therefore offers also in this aspect a significant time saving.

The other growth inhibiting active substance is selected from the group of gibberellin synthesis inhibitors, single L-amino acids, and combinations thereof.

Gibberellin synthesis inhibitors are substances which impair the production of the plant hormones which belong to the family of the gibberellins. The inventor has found that these growth inhibiting active substances or agents show a very strong synergistic effect with S-abscisic acid, whereby because of their combination the increase of the yield of the plant of the crops is even stronger.

The gibberellin synthesis inhibitor is selected from the group consisting of trinexapac-ethyl, chloromequat-Cl, mepiquat-CI, 2-isopropyl-4-dimethylamino-5-methylphenyl-1-piperidinecarboxylate methyl chloride (also known as "AMO-1618"), ancymidole, flurprimidole, prohexadione-Ca, daminozide, 16,17-dihydorgas, chlorpropham and combinations of two or more thereof. More preferably trinexapac-ethyl is used.

These substances all show a strongly inhibiting activity on the synthesis of gibberellin, and a strong synergistic effect with abscisic acid, whereby the yield of crops is significantly further increased.

Preferably the S-abscisic acid or the salt thereof is dosed in an amount corresponding to at least 0.1 g/hectare, more preferably at least 0.2 g/ha, even more preferably at least 1 g/ha, yet more preferably at least 1.5 or even 2 g/ha, and in some circumstances preferably at least 4 g/hectare. The dosing is preferably at most 40 g/hectare, more preferably at most 25 g/ha, even more preferably at most 15 g/ha, preferably at most 10 or even 7 g/ha, and more preferably at most 6 g/ha. A very advantageous amount is 2 g/hectare.

With such amounts the inventor has observed a very advantageous effect with respect to activity and yield increase by the S-abscisic acid.

The gibberellin synthesis inhibitor is by preference dosed in an amount corresponding to at least 5 g/hectare and at most 1500 g/hectare. More preferably this growth-inhibiting substance is dosed in an amount which corresponds to at least 10 g/ha, more preferably at least 15 g/ha, preferably at least 50 g/ha, more preferably at least 100 g/ha, even more preferably at least 150 g/ha, and depending on the choice of substance, such as for example mepiquat, at least 400 g/ha, more preferably at least 500 g/ha, even more preferably at least 700 g/ha, preferably at least 900 g/ha, yet more preferably at least 1000 g/ha, preferably at least 1200 g/ha. Optionally this growth-inhibiting substance is dosed in an amount corresponding to at most 1400 g/ha, preferably at most 1300 g/ha, even more preferably at most 1200 g/ha, and dependent on the choice of substance, such as with the use of trinexapac-ethyl, chloromequat and/or prohexadion-calcium, at most 1000 g/ha, preferably at most 900 g/ha, even more preferably at most 700 g/ha, and in particular circumstances at most 500 or even only 400 g/ha.

In these quantities the other growth inhibiting active substance will show a strong synergistic effect with S-abscisic acid and consequently the yield increase will be higher. The range of quantities wherein the other growth inhibiting active substance may be applied is defined fairly broadly. This is because the most appropriate quantity usually differs for different substances. The skilled person is able to determine the best quantities, dependent on the growth inhibiting substance or substances used and the specific conditions wherein they are used.

In another embodiment of the present invention, the growth inhibiting active substance Is selected from one or more single L-amino acids.

Preferably these single L-amino acids are present in the composition in low concentrations, and/or they are applied in very low doses.

The inventor has found that low doses of amino acids have a vegetative growth inhibiting and yield increasing effect on annual as well as perennial and on monocot as well as on dicot crops. Together with the S-abscisic acid, in addition a synergistic effect is obtained. The yield increasing effect of the present invention will thereby be further increased. The application of low doses of single amino acids will in addition stimulate also the size of the fruits or seeds as well as the fruit set in general.

The L-amino acids are preferably selected from the group of L-amino acids comprising an N-atom in the R-group, the acid forms of L-amino acids comprising an N-atom in the R-group, and combinations thereof. Hereby the R-group refers to a side group which in many cases occurs in the usual hydrocarbon connection between the amino group (H₂N-) at one end and the acid group (-COOH) at the other end of the amino acid.

More preferably the L-amino acids are selected from the group of glutamine, glutamic acid, asparagine, aspartic acid, histidine, lysine, arginine and combinations thereof.

The inventor has found that the growth inhibiting effect and the synergistic effect mentioned above is the strongest with these L-amino acids.

The single L-amino acids are preferably dosed in a total amount which corresponds to at least 0.5 g/hectare and at most 250 g/ha, preferably at most 50 g/hectare.

It further is very important that the total amount of L-amino acids remains within the range mentioned above. A composition whereby one specific single amino acid when applying the composition is in the range from 0.5 to 250 g per hectare, but whereby further single L-amino acids are present such that the total dose of single L-amino acids significantly exceeds the 250 g per hectare, will thus possibly not bring the targeted effect. The growth inhibiting activity of the L-amino acids as active substance may in such case thus disappear.

The total amount of single L-amino acids when applying the composition is preferably at least 1 g/hectare and at most 50 g/hectare.

In this low dosing range usually the best results are obtained, and the growth of the crops is In many cases optimally regulated. More specifically is the growth of the fruits and the seeds strongly stimulated, and is the yield of the crops very high.

As already described above, the present invention relates to the use of a composition of single L-amino acids primarily for the influencing of the growth of crops. The influencing of the crops may vary depending on the used doses of the single L-amino acids which are applied to the crops, and different forms of influencing are possible.

As such, the invention more specifically relates to the use of the composition mentioned above for the inhibition of the vegetative growth of crops, whereby the total amount of single L-amino acids when applying the composition is at least 1 g/hectare and at most 30 g/hectare.

If the L-amino acids are applied in such amounts onto the crops, a clearly growth inhibiting effect is observed. This growth inhibiting effect only relates to the vegetative growth of the plants, being the growth of the shoot. This is usually the growth of the green part of the plants, and is by no means to be confused with the growth of the fruits and of the seeds, also called generative growth, which is not inhibited at all.

In these dosages, the composition as used in the present invention may therefore also be used as a growth inhibitor. This may for example bring the additional advantage that the crops are less fast in need to be pruned, less likely to lie down, etc ... Also, due to the reduced leaf growth, the fruit and seeds may receive an improved access to sunlight and aeration, which may also benefit the quality and yield. Fruits, which thanks to the reduced leaf growth received an increased dose of sunlight, will show a more intense coloring and their protein and sugar will also be increased.

It should further be noted that if the vegetative growth is impaired, meaning the growth in the longitudinal direction of the plant and substantially the growth of the green parts of the plant, then the generative plant growth, i.e. growth of the fruit and the seeds, is strongly stimulated. This may be explained by an assumed balance shift within the plant from vegetative to generative growth. More energy and nutrients are sent to the reproductive organs of the plant, whereby more and/or larger fruits and seeds will be formed. As was mentioned above, the inhibitory effect obtained is in no way related to the growth of the fruits and seeds, and the increased yield and fruit set which were discussed above, are still taking place at these very low dosages.

Preferably the composition as used in the invention, in case it is used for inhibiting the vegetative growth of crops such as described above, is applied at least twice on the crops, thereby preferably maintaining an interval of at least 1 day or 2 days and at most 6 weeks, more preferably at least 3 or 4 days and at most 5 weeks, more preferably at least 5 or 6 days and at most 4 weeks, and even more preferably an interval of at least 1 week and at most 3 weeks. The mentioned intervals are very suitable for arable crops, and may shorten to at most 2 weeks. With trees, especially with fruit trees, the interval may generally be somewhat longer, preferably from 1 to 3 weeks between the two treatments.

The inventor has found that if the composition is applied at least twice using such interval, a very good inhibition of the vegetative growth is achieved. Preferably, the composition is applied twice. Optionally, the composition may also be applied more than twice, preferably every time respecting the interval mentioned above.

Obviously the invention is not limited by this. With various single L-amino acids, an acceptable influencing is already obtained if the composition is applied only once.

The inventor has found that with these low doses the synergistic effect and the growth inhibiting effect are the strongest. It is important that the total dosing of single amino acids does not exceed this limit. If a plurality of amino acids is present, and each amino acid remains within these margins, but if thereby the total dosing strongly exceeds these margins, a significant risk exists that the effect described above may not be obtained.

In a further preferred embodiment, the composition as used in the invention further contains a pesticide selected from the group of herbicides, insecticides, fungicides, bactericides, nematicides, algicides, molluscicides, rodenticides, virucides, substances which induce plant resistance, biological control agents such as viruses, bacteria, nematodes, fungi and other microorganisms, repellents of birds and animals, plant growth regulators, or a combination of two or more thereof.

If a composition as used in the present invention also contains pesticides, this composition will comprise apart from a yield enhancing effect also a function as a pesticide. Different types of pests such as insects, bacterial pathogens and the like may disastrously affect crop yield and may even lead to the death of the crops. If the composition as used in the present invention only induces a yield increasing effect in the plants, there is still the possibility that this effect Is offset as a result of such pest infestation. Therefore it may be useful to add a pesticide to the composition. The composition will hereby combine a growth regulator effects with an effect of pest control. Because the active ingredients which create these two different effects are present in a single composition, only one composition will have to be applied on the crop. This represents considerable time and money savings for the farmer concerned. It should be noted that a reduced vegetative growth by itself may already entail a reduced risk for affection by diseases and plagues. In some cases this effect is already at least partially achieved by the application according to the present invention.

In a particularly preferred embodiment of the present invention the pesticide is a fungicide selected from the group of triazoles, and combinations thereof.

The inventor has surprisingly found that fungicides selected from the group of triazoles in addition to a fungicidal effect also may enhance the yield increasing activity of the S-abscisic acid together with the other growth regulators. Adding these fungicides from the group of the triazoles therefore offers two important additional benefits.

These triazoles are preferably selected from the group of epoxiconazole, triadimenol, propiconazole, metconazole, cyproconazole, tebuconazole, flusilazole, difenoconazole, penconazole, paclobutrazole, prothloconazole, and combinations of two or more thereof. The triazoles are preferably selected according to the crop to be treated. As such are epixiconazole, propiconazole, tebuconazole more appropriate for cereals, metconazole, tebuconazole, for example for rapeseed, and difenoconazole is more appropriate for fruit cultures.

The composition as used in the present invention is by no means limited hereto, and any other triazoles considered suitable by the skilled person, may also be used.

The fungicide is preferably dosed in an amount which corresponds to at least 1 g/hectare and at most 1500 g/hectare.

In such doses a sufficient fungicidal activity is obtained, and the yield increasing activity of the other active substances is also stimulated. The range of the amounts and doses in which the fungicide may be applied is defined fairly broadly. This is because the exact optimal amount differs between substances. The skilled person is able to determine the correct amount, depending on the fungicide used and the specific conditions in which it is used.

In an embodiment of the invention the composition further contains one or more active substances which increase the plant's own defence mechanism. Besides their basic resistance plants possess the capacity to increase their resistance to specific infections in response to induction by micro-organisms from the outside. One distinguishes therein systemic acquired resistance (SAR) and induced systemic resistance (ISR). In the SAR, the inducing micro-organism is pathogenic, whereas in ISR this is not the case. Preferably, substances are therefore added which promote these mechanisms, such as jasmonic acid, ethyljasmonate or another precursor for ethylene which affect the ISR response, or salicylic acid and/or chitosan, or another substance which affects the SAR mechanism. The inventors have found that these active substances may also bring a growth Inhibiting effect.

In further embodiments of the invention the composition further contains one or more surfactants.

Preferably the surfactants are selected from the group of calcium alkyl sulfonates, ethoxylated castor oil, ethoxylated alcohols, glycols or polyols, polyoxyethylated alkyl phenols, polyoxyethylated fatty alcohols and/or fatty amines, fatty alcohol polyglycol ether sulfates, alkyl sulphonates or alkylaryl sulphonates and dispersants, ethoxylated sorbitan esters and siloxanes, or a mixture of two or more thereof.

Surfactants are substances which are able to decrease the surface tension of an aqueous mixture. In compositions which are to be applied to plants, they may perform different functions. They may for instance increase the solubility of the active ingredients in the usually water based mixture. Furthermore, they often perform a function of wetting agent. Because the surface tension of the mixture is reduced by it, hydrophobic surfaces may be wetted more quickly. Adding a wetting agent may thus lead to a better distribution of for example the sprayed liquid, and to a better wetting of the sprayed crops. Furthermore, surfactants may act as adjuvants. Hereby, they increases the absorption of the active substance by the plant. The above described functions of the surfactants ensure that less active substance should be dosed without affecting the activity of the active substance. This brings an economic advantage and also ensures that the impact on the environment is reduced.

Furthermore, the composition may contain one or more UV-filtering substances.

Sunlight reaching the composition may cause a premature inactivation of the active substances. To prevent this, preferably one or more UV-filtering substances are added as a matter of precaution. Several suitable UV filters are known in the art.

In a further embodiment the composition further contains an anti-foaming agent.

Preferably the anti-foaming agent is selected from the group of silica, polydialkylsiloxanes, fluoroalkylphosphinic acids or salts thereof, or a mixture of two or more thereof.

In a further embodiment the composition further contains a fertilizer.

The composition as used in the present invention will influence the life processes of plants, such that the yield is increased. If a fertilizer Is further present in the composition, it is ensured that the plants have sufficient nutrients available to enable this growth, whereby the yield may be further increased.

Besides the additives described above, also other additives may be added, such as inert materials, carriers, solvents, and the like. The skilled person Is able to determine which additives should further be added to the composition, dependent on the composition and of the specific situation wherein it is used.

Preferably, the composition is applied in a formulation selected from the group of powders, water soluble powders, water dispersible powders, granules, suspension concentrates, emulsifiable concentrates, concentrated emulsions, suspoemulsions, coated granules, microcapsules, tablets, water soluble concentrates, or combinations of two or more thereof.

Preferably, the composition is diluted with water.

A composition which may be diluted with water may be sold commercially in a concentrated form with a small volume. This form may then be dissolved or mixed with water to a larger volume which eventually may be applied to the plants. An aqueous dilution may very easily be applied to the plants, and also ensures an even distribution of active substances on the crops, whereby a constant concentration and an evenly spread dosage of the active substances during application is assured. The latter represents within the context of the present invention an important advantage because the activity of the active ingredients is dependent on the dosage.

Preferably, the composition is applied on the crops by spraying or atomizing.

By spraying or atomizing a uniform and even distribution of the composition on the crops may be obtained.

Preferably, the crops are selected from the group of annual and perennial monocot and dicot crops.

The composition as used in the present invention may be used on monocot crops as well as on dicot crops, and shows a good activity on both groups of plants.

Preferably, the crops are selected from fruit trees, cereals, rape, beet, potatoes, and any possible combinations thereof.

These crops show a strong increase in yield upon application of the composition as used according to the present invention.

In the above description of the invention, the quantities of the substances are mentioned in grams/hectare (g/ha). This represents the amount with which the substances are applied to the crops. Preferably the substances are applied in an aqueous solution whereby for example for an easy conversion approximately 1000 liters of this solution is applied to a plot of 1 hectare. This means for example that in a composition wherein the abscisic acid is applied in an amount of 2 g per hectare, it is in an aqueous solution in a concentration of 2 ppm wt. In practice, a different amount of water per hectare may be used, and the conversion to the desired concentration may therefore be adjusted. Thus, with a use of only 200 liters per hectare, which also means about 200 kg of water, a treatment intended for 2 g per hectare should use a concentration of 2 g per 200 kg or about 10 ppm by weight.

The invention is now further illustrated by the following examples.

### Example 1: Yield increase with Apple.

This experiment was performed on mature apple trees of the variety Jonagold, (mutant Jonagored). The sprayings were performed with an atomizer, each time applying an amount of 300 liter of water per hectare.

S-abscisic acid (ABA) was applied alone as well as in combination with glutamine. The applications were started around the end of flowering and were repeated every 10 to 14 days. ABA was first applied in two consecutive treatments, each time using a concentration of 3.3 ppm wt, and thus in a dosing of 1.0 g/ha. The composition with glutamine was applied until the end of the growing season, and with a concentration of 50 ppm wt, and thus in a dosing of 15 g/ha. ABA was also in this test applied only twice, on April 24 and May 7. The applications of glutamine were started around the end of flowering and were repeated every 7 to 14 days, depending on the weather conditions. In total there were 7 treatments, more precisely on April 24, May 7, May 14, May 20, June 9, June 16 and June 24. Immediately after the treatments, on June 25, also the average fruit diameter was determined. The results are given in Table 1.

**Table 1**

| **Object** | **Nr of fruits per cluster** | **Fruit diameter (mm) on June 25** |
|---|---|---|
| Control | 0.75 | 44.0 |
| ABA | 0.80 | 43.8 |
| ABA + glutamine | 0.95 | 44.0 |

This experiment shows that ABA by itself already increases fruit set, but this effect is much stronger in combination with glutamine. ABA alone may thus already have a positive effect on the fruit set. However this effect is relatively small and possibly somewhat uncertain. The combination with the amino acid glutamine gives a clearly much bigger fruit set, which indicates a synergistic effect. One could suffice with two treatments at the start of the growing season, but more applications spread over the entire growing season are giving a more certain result. The fruit size is clearly not influenced by the treatments.

### Example 2: Yield increase with wheat

This experiment was performed on winter wheat. ABA was applied to the winter wheat in two different doses, respectively 2 and 4 gram/hectare. The dose of 2 gram was repeated in combination with 5 g/ha of histidine.

The length of the ears (expressed in mm), the number of filled spikelets, the average number of grains counted per 50 ears, and as a quality parameter also the kernel weight of 1000 ears ("1000 kernel wt") were determined. The results are given in Table 2.

**Table 2**

| **Object** | **Ear Length (mm)** | **Nr. filled spikelets** | **Nr. grains/ 50 ears** | **1000 kernel wt (gram)** |
|---|---|---|---|---|
| Control | 72 | 9.9 | 76.5 | 43.0 |
| ABA 2 g/ha | 75 | 9.9 | 72.4 | 43.6 |
| ABA 4 g/ha | 78 | 10.2 | 84.7 | 44.8 |
| ABA 2 g/ha + histidine 5 g/ha | 76 | 10.2 | 80.0 | 45.8 |

The results show that ABA leads to longer ears, which remain nicely filled because the number of filled spikelets increases accordingly, as well as the number of grains per 50 ears. The thickness of the grains thereby does not reduce, but rather even increases. The tests with ABA alone also indicate that with these low doses there is a dose effect, and the effect is thus more pronounced with the double dose.

The results also show that the application according to the invention, i.e. the test with ABA in combination with histidine, achieves a result which is very similar to the double dosing of ABA alone. This brings an important economic advantage, because ABA is rather scarce, and therefore a component much more expensive to apply than the other growth regulators such as histidine, even with a somewhat higher dose.

### Example 3: Yield increase with winter wheat.

This experiment was also performed on winter wheat. ABA was applied twice onto the winter wheat, each time with a dose of 2 gram/hectare. Trinexapac-ethyl was applied once, at 200 gram/hectare. Glutamic acid was applied twice, each time at 50 gram/hectare.

The length of the ears (expressed in mm) of 50 ears were determined. The results are given in Table 3.

**Table 3**

| **Object** | **Ear length (mm)** |
|---|---|
| Control | 9.5 |
| Trinexapac-ethyl | 9.8 |
| ABA | 9.8 |
| Glutamic acid | 9.4 |
| ABA + Trinexapac-ethyl | 10.3 |
| ABA + glutamic acid | 10.3 |

These results show that the application of ABA or of the growth inhibiting active substances alone does not give any or only a slight increase of the ear length and thus of the yield. The combination of ABA with Trinexapac-ethyl or glutamic acid provides an increase of the ear length with more than 8%.

## Claims

1. Use of a composition containing S-abscisic acid or a salt thereof and another growth-inhibiting active substance during a period of vegetative growth for increasing the yield of agricultural and horticultural crops, whereby the S-abscisic acid or the salt thereof is dosed in an amount corresponding to at most 40 g/ha, whereby the other growth-inhibiting active substance is selected from the group of gibberellin synthesis inhibitors, single L-amino acids, and combinations thereof, and whereby the gibberellin synthesis inhibitor is selected from the group of trinexapac-ethyl, chloromequat-Cl, mepiquat-Cl, 2-isopropyl-4-dimethylamino-5-methylphenyl-1-piperidinecar-carboxylate methyl chloride (also known as "AMO-1618"), ancymidole, flurprimidole, prohexadione Ca, daminozide, 16,17-dihydrogas, chlorpropham and combinations of two or more thereof.

2. Use according to claim 1, whereby the S-abscisic acid or a salt thereof is dosed in an amount equivalent to at least 0.1 g/ha, more preferably at least 2 g/ha and at most 40 g/ha preferably not more than 6 g/ha.

3. Use according to claim 1 or 2, whereby the gibberellin synthesis inhibitor is dosed in an amount equivalent to at least 5 g/ha and at most 1500 g/ha.

4. Use according to any one of the preceding claims, whereby the other growth-inhibiting active substance is one or more single L-amino acids and whereby the single L-amino acids are selected from the group of L-amino acids containing an N-atom in the R-group, the acid forms of L-amino acids containing an N-atom in the R-group and combinations thereof.

5. Use according to claim 4, whereby the L-amino acids are selected from the group of glutamine, glutamic acid, asparagine, aspartic acid, histidine, lysine, arginine and combinations thereof.

6. Use according to claim 4 or 5, whereby the single L-amino acids are dosed in a total amount corresponding to at least 0.5 g/ha and at most 250, preferably at most 50 g/ha.

7. Use according to any one of the preceding claims, whereby the composition further comprises a pesticide selected from the group of herbicides, insecticides, fungicides, bactericides, nematicides, algicides, molluscicides, rodenticides, virucides, substances which induce resistance in plants, biological control agents such as viruses, bacteria, nematodes, fungi and other microorganisms, repellents of birds and animals, or a combination of two or more thereof.

8. Use according to claim 7, whereby the pesticide is a fungicide selected from the group of triazoles, and combinations thereof.

9. Use according to any one of the preceding claims, whereby the composition further contains one or more surfactants.

10. Use according to any one of the preceding claims, whereby the composition further contains one or more UV-filtering substances.

11. Use according to any one of the preceding claims, whereby the composition further contains an anti-foam agent.

12. Use according to any one of the preceding claims, whereby the composition further contains a fertilizer.

13. Use according to any one of the preceding claims, whereby the composition is applied in a formulation selected from the group of powders, water soluble powders, water dispersible powders, granules, suspension concentrates, emulsifiable concentrates, concentrated emulsions, suspoemulsions, coated granules, microcapsules, tablets, water soluble concentrates or combinations of two or more thereof.

14. Use according to any one of the preceding claims, whereby the crops are selected from the group of annual and perennial monocot or dicot crops.

15. Use according to claim 14, whereby the crops are selected from fruit trees, cereals, rape, beet, potatoes, and possible combinations thereof.

## Patentansprüche

1. Verwendung einer Zusammensetzung, die S-Abscisinsäure oder ein Salz davon und einen anderen wachstumshemmenden Wirkstoff enthält, während eines vegetativen Wachstumszeitraums zum Erhöhen des Ertrags von landwirtschaftlichen und gartenbaulichen Nutzpflanzen, wobei die S-Abscisinsäure oder das Salz davon in einer Menge dosiert werden, die höchstens 40 g/ha entspricht, wobei der andere wachstumshemmende Wirkstoff ausgewählt ist aus der Gruppe von Gibberellin-Synthese-Inhibitoren, einzelnen L-Aminosäuren und Kombinationen davon und wobei der Gibberellin-Synthese-Inhibitor ausgewählt ist aus der Gruppe von Trinexapacethyl, Chlormequat-Cl, Mepiquat-Cl, 2-Isopropyl-4-dimethylamino-5-methylphenyl-1-piperidincarboxylatmethylchlorid (auch bekannt als "AMO-1618"), Ancymidol, Flurprimidol, Prohexadion-Ca, Daminozid, 16,17-dihydrogas, Chlorpropham und Kombinationen von zwei oder mehreren davon.

2. Verwendung nach Anspruch 1, wobei die S-Abscisinsäure oder ein Salz davon in einer Menge dosiert wird, die mindestens 0,1 g/ha, mehr bevorzugt mindestens 2 g/ha und höchstens 40 g/ha, vorzugsweise nicht mehr als 6 g/ha entspricht.

3. Verwendung nach Anspruch 1 oder 2, wobei der Gibberellin-Synthese-Inhibitor in einer Menge dosiert wird, die mindestens 5 g/ha und höchstens 1500 g/ha entspricht.

4. Verwendung nach einem der vorhergehenden Ansprüche, wobei der andere wachstumshemmende Wirkstoff eine oder mehrere einzelne L-Aminosäuren ist und wobei die einzelnen L-Aminosäuren ausgewählt sind aus der Gruppe von L-Aminosäuren, die ein N-Atom in der R-Gruppe enthalten, den Säureformen von L-Aminosäuren, die ein N-Atom in der R-Gruppe enthalten, und Kombinationen davon.

5. Verwendung nach Anspruch 4, wobei die L-Aminosäuren ausgewählt sind aus der Gruppe von Glutamin, Glutaminsäure, Asparagin, Asparaginsäure, Histidin, Lysin, Arginin und Kombinationen davon.

6. Verwendung nach Anspruch 4 oder 5, wobei die einzelnen L-Aminosäuren in einer Gesamtmenge dosiert werden, die mindestens 0,5 g/ha und höchstens 250, vorzugsweise höchstens 50 g/ha entspricht.

7. Verwendung nach einem der vorhergehenden Ansprüche, wobei die Zusammensetzung ferner ein Pestizid umfasst, das ausgewählt ist aus der Gruppe von Herbiziden, Insektiziden, Fungiziden, Bakteriziden, Nematiziden, Algiziden, Molluskiziden, Rodentiziden, Viruziden, Stoffen, die in Pflanzen Resistenz induzieren, biologischen Bekämpfungsmitteln wie Viren, Bakterien, Nematoden, Pilzen und anderen Mikroorganismen, Abwehrmitteln gegen Vögel und Tiere oder einer Kombination von zwei oder mehreren davon.

8. Verwendung nach Anspruch 7, wobei das Pestizid ein Fungizid ist, das ausgewählt ist aus der Gruppe von Triazolen und Kombinationen davon.

9. Verwendung nach einem der vorhergehenden Ansprüche, wobei die Zusammensetzung ferner ein oder mehrere Tenside enthält.

10. Verwendung nach einem der vorhergehenden Ansprüche, wobei die Zusammensetzung ferner ein oder mehrere UV-Filterstoffe enthält.

11. Verwendung nach einem der vorhergehenden Ansprüche, wobei die Zusammensetzung ferner ein Antischaummittel enthält.

12. Verwendung nach einem der vorhergehenden Ansprüche, wobei die Zusammensetzung ferner ein Düngemittel enthält.

13. Verwendung nach einem der vorhergehenden Ansprüche, wobei die Zusammensetzung in einer Formulierung angewendet wird, die ausgewählt ist aus der Gruppe von Pulvern, wasserlöslichen Pulvern, wasserdispergierbaren Pulvern, Granalien, Suspensionskonzentraten, emulgierbaren Konzentraten, konzentrierten Emulsionen, Suspo-Emulsionen, beschichteten Granalien, Mikrokapseln, Tabletten, wasserlöslichen Konzentraten oder Kombinationen von zwei oder mehreren davon.

14. Verwendung nach einem der vorhergehenden Ansprüche, wobei die Nutzpflanzen ausgewählt sind aus der Gruppe von einjährigen und mehrjährigen monokotylen oder dikotylen Nutzpflanzen.

15. Verwendung nach Anspruch 14, wobei die Nutzpflanzen ausgewählt sind aus Obstbäumen, Getreide, Raps, Rüben, Kartoffeln und möglichen Kombinationen davon.

## Revendications

1. Utilisation d'une composition contenant de l'acide S-abscissique ou un sel de celui-ci ou une autre substance active inhibitrice de croissance pendant une période de croissance végétative pour accroître le rendement de cultures agricoles et horticoles, selon laquelle l'acide S-abscissique ou le sel de celui-ci est dosé dans une quantité correspondant à au plus 40 g/ha, selon laquelle l'autre substance active inhibitrice de croissance est sélectionnée dans le groupe des inhibiteurs de synthèse des gibbérellines, des L-aminoacides seuls et des combinaisons de ceux-ci, et selon laquelle l'inhibiteur de synthèse des gibbérellines est sélectionné dans le groupe consistant en trinéxapac-éthyle, chloroméquat-Cl, mépiquat-CI, 2-isopropyl-4-diméthylamino-5-méthylphényl-1-pipéridine carboxylate méthyl chlorure (également connu comme «AMO-1618»), ancymidole, flurprirmidole, prohexadione Ca, daminozide, 16,17-dihydrogas, chlorprophame et des combinaisons de deux ou de plus de deux de ceux-ci.

2. Utilisation selon la revendication 1, selon laquelle l'acide S-abscissique ou un sel de celui-ci est dosé dans une quantité équivalant à au moins 0,1 g/ha, mieux encore à au moins 2 g/ha et au plus 40 g/ha, de préférence à pas plus de 6 g/ha.

3. Utilisation selon la revendication 1 ou 2, selon laquelle l'inhibiteur de synthèse des gibbérellines est dosé dans une quantité équivalant à au moins 5 g/ha et au plus 1500 g/ha.

4. Utilisation selon l'une quelconque des revendications précédentes, selon laquelle l'autre substance active inhibitrice de croissance est un ou plusieurs L-aminoacides seuls et selon laquelle les L-aminoacides seuls sont sélectionnés dans le groupe des L-aminoacides contenant un atome N dans le groupe R, les formes acides des L-aminoacides contenant un atome N dans le groupe R et des combinaisons de ceux-ci.

5. Utilisation selon la revendication 4, selon laquelle les L-aminoacides sont sélectionnés dans le groupe de la glutamine, l'acide glutamique, l'asparagine, l'acide aspartique, l'histidine, la lysine, l'arginine et des combinaisons de ceux-ci.

6. Utilisation selon la revendication 4 ou 5, selon laquelle les L-aminoacides seuls sont dosés dans une quantité totale correspondant à au moins 0,5 g/ha et au plus 250, de préférence à au plus 50 g/ha.

7. Utilisation selon l'une quelconque des revendications précédentes, selon laquelle la composition comprend en outre un pesticide sélectionné dans le groupe des herbicides, insecticides, fongicides, bactéricides, nématicides, algicides, molluscicides, rodenticides, virucides, substances qui induisent une résistance dans les plantes, agents de contrôle biologique tels que virus, bactéries, nématodes, champignons et autres micro-organismes, répulsifs pour oiseaux et animaux ou une combinaison de deux ou de plus de deux de ceux-ci.

8. Utilisation selon la revendication 7, selon laquelle le pesticide est un fongicide sélectionné dans le groupe des triazoles et des combinaisons de ceux-ci.

9. Utilisation selon l'une quelconque des revendications précédentes, selon laquelle la composition comprend en outre un ou plusieurs tensioactifs.

10. Utilisation selon l'une quelconque des revendications précédentes, selon laquelle la composition comprend en outre une ou plusieurs substances filtrant les UV.

11. Utilisation selon l'une quelconque des revendications précédentes, selon laquelle la composition comprend en outre un agent antimousse.

12. Utilisation selon l'une quelconque des revendications précédentes, selon laquelle la composition comprend en outre un fertilisant.

13. Utilisation selon l'une quelconque des revendications précédentes, selon laquelle la composition est appliquée dans une formulation sélectionnée dans le groupe des poudres, poudres solubles dans l'eau, poudres dispersibles dans l'eau, granulés, concentrés en suspension, concentrés émulsifiables, émulsions concentrées, suspo-émulsions, granulés enduits, microcapsules, tablettes, concentrés solubles dans l'eau ou des combinaisons de deux ou de plus de deux de ceux-ci.

14. Utilisation selon l'une quelconque des revendications précédentes, selon laquelle les cultures sont sélectionnées dans le groupe des cultures monocotylédones ou dicotylédones annuelles et vivaces.

15. Utilisation, selon la revendication 14, selon laquelle les cultures sont sélectionnées parmi les arbres fruitiers, les céréales, le colza, les betteraves, les pommes de terre et d'éventuelles combinaisons de ceux-ci.
